**Europäisches Patentamt**

**European Patent Office**

**Office européen des brevets**

(11) Publication number: **0 144 493**

**B1**

(12) **EUROPEAN PATENT SPECIFICATION**

(45) Date of publication of patent specification: **09.11.88**

(51) Int. Cl.⁴: **B 01 D 13/04**

(21) Application number: **84105108.9**

(22) Date of filing: **13.03.81**

(60) Publication number of the earlier application in accordance with Art. 76 EPC: **0 036 315**

(54) Method of preparing asymmetric membranes.

(30) Priority: **14.03.80 US 130566**

(43) Date of publication of application:
**19.06.85 Bulletin 85/25**

(45) Publication of the grant of the patent:
**09.11.88 Bulletin 88/45**

(84) Designated Contracting States:
**DE FR GB IT SE**

(56) References cited:
**DE-A-1 794 191**
**DE-A-2 737 745**
**US-A-3 615 024**

(73) Proprietor: **BRUNSWICK CORPORATION**
**One Brunswick Plaza**
**Skokie Illinois 60077 (US)**

(72) Inventor: **Wrasildlo, Wolfgang J.**
**7961 Prospect Pl**
**La Jolla California (US)**

(74) Representative: **Spencer, Graham Easdale et al**
**A.A. Thornton & CO Northumberland House**
**303-306, High Holborn**
**London WC1V 7LE (GB)**

Courier Press, Leamington Spa, England.

## Description

This invention relates generally to the preparation of membranes which are useful as ultrafilters and as microporous membranes useful in separating materials.

Polymeric membranes are well known. These membranes may generally be classified according to the sizes of particles which they retain or according to their pore size as either ultrafilter membranes, which have the finest pores, or microporous, or microfilter membranes which have coarser pores. The dividing line between ultrafilter membranes and microfilter membranes is at approximately 0.05 micrometres in pore size or smallest retained particle.

Membranes may also be classified according to the porosity difference or similarity of their two faces. Thus, membranes may be classified as symmetrical, when the two faces have similar porosity or as asymmetrical when the two faces differ in porosity.

An important characteristic of a membrane is its permeability to water which is customarily expressed in units of cm/min-psi which represents the macroscopic velocity in cm/min at which water flows through the membrane when the driving pressure is one psi. This permeability may be measured by the volume of pure water which passes through a unit area of membrane per unit time.

The flow of water through the membrane is, within wide limits, directly proportional to the applied pressure. In general, the permeability to water decreases as the retentivity of the membrane to solutes increases, because smaller pores offer more resistance to flow. This relationship, however, is not a simple one since the retentivity depends on the single smallest pore encountered by the liquid in passing the membrane, whereas the resistance to flow depends on the cumulative effect of all the pores through which the sample must pass. Hence, membranes of similar solute retention having uniform pores throughout their entire thickness have lower permeabilities than those whose retentivity is due to a thin skin having proper pore sizes combined with a body or substrate of much larger pores. In other words, symmetrical membranes offer more resistance to fluid flow and therefore have slower flow rates compared to asymmetrical membranes of similar retentivity.

In addition to their retention characteristics, membranes may be characterized by their ability to resist plugging or their dirt-holding capacity. Plugging refers to a reduction of the filtration rate during the filtering operation as a function of the amount of liquid passing the membrane. In order to extend the lifetime of a membrane in a given filtration operation, it is customary to prefilter the fluid through a membrane or filter having higher flow rates and smaller retentivities, but still the ability to reduce severe fouling, or blocking of the final membrane filter.

Structurally, membranes vary greatly and may generally be classified as either reticulated or granular. In the former, there is a three-dimensional open network of interconnecting fibrous strands and open interstitial flow channels. In the granular type structure, however, incompletely coalesced solid particles called granules leave an interconnected network of pores between them. Reticulated membrane structures generally have a higher porosity than granular membrane structures. (Porosity of membranes is defined as (1- the relative density). This difference, in turn, is the ratio of the weight of a given volume of membrane to that of the bulk polymer forming the membrane).

Polymeric membranes are generally made by preparing a solution of the polymer in a suitable solvent, forming the solution into a thin sheet, a hollow tube or a hollow fibre, and then precipitating the polymer under controlled conditions. Precipitation may be carried out by solvent evaporation or by contacting the polymer solution with a nonsolvent.

U.S. Patent No. 3,615,024 discloses a method of forming porous polymeric membranes which are described as being highly asymmetric. The membranes produced according to that method are only slightly asymmetric, however, and have permeability to water which is only slightly higher than that of symmetrical membranes of the same retentivity.

Membranes may also be classified as either composite, supported or integral. Composite membranes comprise a very thin retentive layer attached to a preformed porous support. In a supported membrane, the actual membrane is attached to a strong sheet material of negligible retentivity. Integral type membranes are formed in one and the same operation having layers of the same composition. These layers may have very different properties, depending, in general, on whether the membrane is symmetrical or asymmetric.

The search has continued for improved, highly asymmetric, membranes having improved retention properties and enhanced flow rates as well as for processes for producing these membranes. This invention was made as a result of that search.

According to the invention, there is provided a method of preparing an asymmetric integral membrane comprising a skin and a porous support having a reticulated structure, which comprises casting a polymer dope while said dope is in a turbid metastable liquid dispersion condition, the concentration of polymer in said polymer dope being high enough to produce a coherent membrane yet low enough to form said reticulated structure.

In the following description, reference will be made to the accompanying drawings, in which:

Figure I comprises two diagrams which show the effect of variations in solvent/non-solvent concentration and in temperature in arriving at the metastable region.

Figure II shows the effect of changes in non- solvent concentration on the flow rate and retention of membranes obtained according to the present invention.

Figure III is a scanning electron microscope photomicrograph of a membrane obtained according to the present invention.

Figure IV is a scanning electron microscope photomicrograph of a membrane of the prior art.

The preparation of membrane casting dopes involves well-known principles of polymer solutility, including the concept of critical miscibility conditions, particularly the critical miscibility temperature, $T_c$. Generally, at temperatures above $T_c$, a polymer is completely miscible with a given solvent, whereas below that temperature, there is a region of phase separation. In the limit of infinite polymer chain length, $T_c$ is the so-called "theta" — or H temperature or condition, where the interaction forces between polymer molecules and solvent molecules equal the interactions of polymer molecules for other molecules of the same polymer.

Solvents for polymers may be categorized into two types. "Good" solvents are those in which the interactions (forces) between the polymer molecules and solvent molecules are greater than the forces of attraction between one polymer molecule and another polymer molecule. "Poor" or "ideal" solvents are those in which the interactions between the polymer and solvent are equal to the forces of attraction between one polymer molecule and another polymer molecule. Very poor solvents, which dissolve little or no polymer, are called non-solvents. These definitions apply not only to pure systems but also to mixtures of solvent as well as mixtures of polymers.

The region on a phase diagram in which polymer is not completely miscible with solvent may be delineated as a function of temperature and solution composition by a curve called the "binodal". On one side of this binodal curve, the system is thermodynamically unstable and on the other side it is stable. The unstable system close to the binodal is believed to undergo phase separation by a nucleation and growth mechanism. Inside the binodal there exists another region called the spinodal. At or close to the spinodal the mechanism of phase separation may change to the so-called "spinodal decomposition" in which periodic and network structures may form without nucleation.

Figure I illustrates schematically the binodal and spinodal curves. Figure Ia shows the effect of temperature and concentration for a polymer and solvent. Line 10 is the binodal and line 11 is the spinodal. The concentration of polymer in the casting dope must be high enough to produce a coherent membrane (see dividing line 12) yet low enough to obtain substantially all reticulated structure in the asymmetric support (see dividing line 13). The dividing lines 12 and 13 have been established for purposes of illustration only and do not represent actual polymer concentrations. Polymers of the present invention may be cast in the shaded area 14 of Figure Ia. Toward the binodal side of region 14, ultrafiltration membranes (pore sizes of from about 0.001 to about 0.05 micrometres) may be produced whereas toward the spinodal side of this region, microporous membranes (pore sizes of from about 0.05 to about 3 micrometres) may be produced. The term "metastable liquid dispersion" is currently used to refer to the region in Figure I between binodal 10 and spinodal 11. Figure Ib is a phase diagram for the three component system polymer-solvent-non-solvent at constant temperature. The numbers in Figure Ib represent the same thing as the corresponding numbers (absent the "a") in Figure Ia represent.

In Figure Ia, toward the left side of line 10 beside shaded area 14 is the region of stable solutions. If polymer dopes are cast in this region, prior art membranes are produced. These membranes lack the reticulated structure of the asymmetric support of the membranes of the present invention. Toward the right side of line 11, Figure Ia, beside shaded area 14 of Figure Ia, there exists the region of two segregated phases where membranes cannot be produced.

When a polymer/solvent system is made to cross the binodal by, for example, lowering the temperature or by, for example, the addition of a non-solvent, phase separation generally occurs spontaneously as evidenced by the appearance of marked turbidity, but phase segregation (i.e., the appearance of two distinct bulk layers) is delayed. The system becomes a liquid-liquid dispersion, whose stability depends markedly on how far the system is within the binodal. When the system is within but close to the binodal condition, the system (i.e., polymer dispersion) may be stable for weeks in the sense that no visible segregation takes place. When the system is further inside the binodal, segregation may occur within hours or even minutes. Since segregated phases are the thermodynamically stable forms of the system, these dispersions are metastable. As the process for converting these metastable dispersions takes only seconds or minutes, it has been found that such dispersions may be used for the formation of membranes.

Furthermore, it has been found that this metastable liquid dispersed state (between binodal 10 and spinodal 11) which is an essential part of this invention, may be approached from the position of a state comprising stable segregated phases by redispersing (i.e., agitating) those segregated phases.

In general, as the system approaches the spinodal from the binodal, the turbidity of the dispersion increases. This is believed due, in part, to the formation of larger dispersed liquid particles.

During quenching of the metastable dispersed polymer solution with a suitable non-solvent, very rapid solidification occurs. While this process of solidification is not yet fully understood, it is believed that for the membranes of this invention, the mechanism of solidification involves spinodal decomposition of the very unstable system formed by the interaction of the coagulating liquid with the casting dope. Because of the rapidity of the process, the process may be carried out even with relatively low viscosity polymer dopes. It is also believed that spinodal decomposition is favored by bringing the casting dope close to its spinodal.

The critical importance of casting membranes from solutions within the binodal is in the way the properties of resulting membranes are affected as illustrated in Figure II. Figure II shows the water permeability and retention of the protein Immunoglobulin G of membranes produced from a dope containing 10 percent polysulfone in dimethylformamide with various amounts of the non-solvent methyl-1 butanol. It may be seen that an enormous change in water permeability and solute retentivity occurs between about 14.4 and 14.6 per cent of added non-solvent. The binodal corresponds to about 14.5 per cent and it is after the binodal is crossed that the water permeability of the resulting membrane is optimized. The individual points in Figure II show how reproducibly the properties of the membranes may be controlled.

In addition to the requirement of a metastable polymer-solvent-non-solvent casting dope, the relationship of these components to the quench liquid is also important. The polymer must, of course, be insoluble in the quench liquid and the solvent should be miscible with the quench liquid (and vice versa). In fact, it is also preferred that the solvent and quench liquid be completely soluble in each other under membrane formation conditions. Water is a generally preferred quench liquid for economic and environmental reasons, although a mixture of 80 per cent water and 20 per cent dimethylformamide is particularly preferred. It is also preferred that the solvent have a low viscosity.

If the solvent has a low viscosity and the solvent and quench liquid are completely soluble in one another, rapid diffusion of the quench liquid into the casting dope is assured.

The non-solvent, if present, should have only limited solubility in the quench liquid. This limited solubility is believed to be effective in increasing the asymmetry of the resulting membrane.

The asymmetry of a porous membrane may be measured by the ratio of the average pore diameter of its two faces.

The formation of membranes having larger pores (above about 0.2 μm) may be accomplished in various ways as discussed herein but, for convenience, the process by which these large pore membranes are produced is preferably facilitated by increasing the proportion of non-solvent in the casting dope. At constant turbidity, the amount of non-solvent that may be added to the system without causing spinodal decomposition is higher at higher temperatures. For best results it is preferred to increase the temperature very close to the critical temperature for a given solvent/non-solvent combination as illustrated in Figure IA and also as in Example VIII. At lower temperatures, the proportions of solvent described are not attainable.

The quench liquid as indicated above should be inert with respect to the polymer used and should preferably be miscible with the polymer solvent and should have limited miscibility with the non-solvent. When water is used as the quench liquid, its properties and those of the resulting membranes may be modified by the presence of certain additives, such as surfactants and solvents. The addition of one or more surfactants to the quench liquid often makes the membrane hydrophilic so that it is easily wetted by water and thus may be used for filtration without substantial pressure to overcome capillary forces.

The amount of surfactant may vary widely but generally from about 0.001 to about 2 per cent, typically from about 0.02 to about 0.2 per cent, and preferably from about 0.02 to about 0.1 per cent by weight total quench liquid may be employed.

Typical surfactants include sodium dodecyl sulfate, ethoxylated alcohols, glycerol esters and fluorocarbon surfactants.

The concentration of the polymer in the casting dope must be low enough to form a substantially all-reticulated structure within the asymmetric support but must be high enough to produce a coherent membrane. If the polymer concentration were too low, the resulting membrane would have no coherency and, in the extreme case, only dust would be formed. If the polymer concentration were too high, then the structure within the asymmetric support would not be all substantially reticulated, but would contain at least some granulated structure.

Although the appropriate concentration of polymer varies somewhat depending upon the particular polymer used, the polymer concentration when the polymer is polysulfone alone should be generally from about 6 to 13, typically from about 8 to about 12, and preferably from about 9 to about 10 percent by weight of the casting dope. The particular polymer chosen will, of course, determine to a large extent, the final properties of the membrane.

It will be evident from the above that this invention may be practiced with a variety of polymers or their mixtures, solvents or their mixtures, and non-solvents or their mixtures and over a range of temperatures, provided that the combination of these components and parameters is such as to produce the desired metastability. The properties and performance of the membrane produced by casting a metastable dope depend not only on the degree of this instability and on the general relationship of mutual solubility of the polymer, solvent, non-solvent and quench liquid as outlined above, but also on the particular materials selected and their mutual interactions in a manner that is not fully understood at present. The following are some of the materials which have been found useful in the practice of this invention but it will be clear to those skilled in the art that many others and/or their combinations may also be used.

The polymers which may be used to produce these membranes include broadly any polymer generally used to produce membranes, although, as will be discussed in greater detail hereinbelow, the choice of polymer is related to the choice of solvent and non-solvent used in the casting process. Polymers which have been found to be particularly useful in the instant process include polysulfone, polyimides, polycarbonates, polyacrylonitriles including polyalkylacrylonitriles, polyquinoxalines and polyquinolines. Mixtures of two or more polymers may also be used.

Preferred polymers within the above noted groups for use in the present invention include Ciba Geigy X U218 polyimide (which is a soluble thermoplastic polyimide based on 5(6) - amino - 1 - (4' - aminophenyl) - 1,3,3 - trimethylindone)), Upjohn P 2080 polyimide, Lexan polycarbonate, polyphenylquinoxaline, and Union Carbide P-3500 polyarylsulfone.

A particularly preferred polymer for use in the presently claimed invention is Union Carbide P-3500 polyarylsulfone. When this particular polymer is employed, it has been found that a minimum molecular weight of 30,000 is needed in order to obtain a coherent membrane with a reticulated structure. The upper limit of molecular weight is approximately one million. The use of polyarylsulfone with molecular weights in excess of one million is undesirable because of the formation of polymer gels. The molecular weight range of the other polymers that may be useful in the presently claimed invention differs, of course, depending upon the particular polymer employed.

The solvents which may be used to produce membranes according to this invention include:

Dimethyl formamide
Dimethyl acetamide
Dioxane
N-Methyl pyrrolidone
Dimethyl sulfoxide
Chloroform
Tetramethylurea
Tetrachloroethane

Suitable non-solvents include:

| | |
|---|---|
| Methanol | Acetone |
| Ethanol | Methyl ethylketone |
| Isopropanol | Methyl isobutyl ketone |
| Amyl alcohol | Nitropropane |
| Hexanol | Butyl ether |
| Heptanol | Ethyl acetate |
| Octanol | Amyl acetate |
| Propane | |
| Hexane | |
| Heptane | |
| Octane | |

A significant advantage of the membranes produced according to the method of the present invention is their high fluid permeability, particularly for small pore sizes. This is believed to be the result of their very high asymmetry so that the reticulated part of the membrane offers a relatively low resistance to fluid flow as compared to the finely porous skin. For example, a membrane prepared according to the method of this invention as described hereinafter in Example VI has a pore size of 0.01 µm and a flow rate of 0.9 cm/min psi, one hundred times higher than that of commercial membranes now available having this pore size. At higher pore sizes the advantage of membranes prepared according to this invention is less striking but remains significant even at the large 0.4/µm pore size (Example VIII). These membranes can provide a flow rate of over 8 cm/min psi which is 30 to 60% greater than that of membranes now commercially available.

A log-log plot of the water permeability of the membranes of the present invention against pore size indicates a less than inverse relationship whereas the same plot of conventional membranes indicates a much faster decrease.

The membranes produced according to the method of this invention may be used with either the skin side or the support side of the membrane upstream with respect to fluid flow. For microporous membranes, however, it is preferred to use the membrane so that the support is upstream. In this way, the reticulated porous support serves as a built-in prefilter, greatly increasing the dirt-holding capacity of the membrane. The fluid encounters the largest pores first and later encounters pores having gradually decreasing size with the smallest pores—those in the skin—being encountered last. Hence larger particles are retained before they reach the skin and do not clog its pores. An in-depth filtration is obtained in which the particles are retained at various levels leaving many more pores available for flow than if they were all retained in one plane at the skin. If the membrane is not highly asymmetrical this advantage does not exist since approximately the same amount of retained matter fouls both sides of the membrane because the pore sizes on both sides are approximately the same.

When a microporous membrane obtained according to the method of the present invention is used with its support side upstream, it has been found that the volume of fluid which may be passed through the membrane by the time the rate of flow through the membrane is reduced to 50% of the initial value is generally at least about 2, typically from about 2 to about 6, and preferably at least about 5 times as large as the volume of fluid which may be passed through the same membrane used with its skin side upstream.

The present invention is further illustrated by the following Examples, in which all parts and percentages are by weight unless otherwise specified. The same applies to the remainder of the specification.

## Example I

A 5% solution of polymethacrylonitrile in dimethylformamide is prepared at 40°C with rapid stirring. The solution is degassed by placing it in a water bath at 40°C for 30 minutes and then cooled to 30°C (below the critical temperature). At the temperature the solution becomes abruptly turbid. This solution is spread by means of a casting knife to a wet thickness of 10 mils onto a glass plate which is preheated to 30°C and the plate is transferred immediately into a water bath at ambient temperature, causing the wet film to coagulate. The resulting membrane has a water flow rate of 0.5 cm/min psi and a pore size of .05 μm.

## Example II

A turbid solution consisting of 4% polyimide (P 2080 Upjohn) and 1.2% polycarbonate (Lexan, very high molecular weight) in dimethylformamide is made at 25°C, degassed for 30 minutes at 25°C, and cast onto a glass plate at 25°C. The wet film is coagulated as in Example I. This membrane has a flow rate of 1.2 cm/min psi and a molecular weight cut-off of $10^6$ corresponding to a pore size of 0.1 μm.

## Example III

A 5% solution of polyphenylquinoxaline dissolved in a mixture of 80% chloroform and 20% m-cresol at 15°C results in a turbid solution which is then cast onto a glass plate cooled to 15°C. The plate is rapidly transferred into a bath of isopropyl alcohol cooled to 10°C. The wet film solidifies instantly to produce a membrane having a flow rate of 3 cm/min psi and a pore size of 0.2 μm.

## Example IV

A solution of polyquinoline (M.W.$_N$ 80,000) in a mixture of 85% chloroform/15% methylene chloride turns cloudy after adding 16.2% i-butyl alcohol at 25°C resulting in a final polymer concentration of 5% by weight. This solution is cast onto a flat polished stainless steel plate at 25°C and placed into an isopropyl alcohol bath at ambient temperature. The rapidly formed membrane has a flow rate of 30 cm/min psi and a surface pore size of 1.2 μm.

## Example V

A solution of polysulfone (P-3500 Union Carbide) is prepared in dimethylformamide and titrated with isopropyl alcohol to a composition consisting of 9.5% polysulfone, 10.3% isopropyl alcohol and 80.2% dimethylformamide. This solution is cast at ambient temperature (which is below the critical temperature) into a membrane as described in Example I. This membrane has a flow rate of 4 cm/min psi and a surface pore size of 0.2 μm, an elongation at break of 24% and a tensile strength of 30 kg/cm².

## Example VI

A mixture of polyimide (4%) and polysulfone (1%) is dissolved in a 50/50 weight mixture of chloroform and cresylic acid. The slightly turbid solution is cast onto a glass plate and quenched into an isopropyl alcohol bath. The resulting membrane has a flow rate of 0.9 cm/min psi and gives a 99.5% retention of ovalbumine.

## Example VII

A solution of polysulfone (P-3500 Union Carbide) is prepared in dimethylformamide and titrated with hexane to a composition consisting of 9.9% polysulfone, 11.9% hexane, and 78.2% dimethylformamide. This solution is cast into water at ambient temperature resulting in a membrane with a flow rate of 0.32 cm/min-psi and 98% retention of ovalbumine.

## Example VIII

A solution of polysulfone (P-3500 Union Carbide) is prepared in dimethylformamide and heated to 40°C. This solution is then titrated with 2-methyl -2-butanol to an absorbance reading of 0.600 corresponding to a concentration of 9.5% polysulfone, 15.5% 2 - methyl - 2 - butanol and 75% dimethylformamide. (The absorbance is zeroed with a 12% polysulfone/88% dimethylformamide solution.) This solution is cast at 40°C into water. The resulting filter has a flow rate 7.4 cm/min psi, a bubble point of 35 psi ($35 \times 6.895 \times 10^3$ Pa) and an average pore diameter of 0.4 μm.

## Comparative Example

Figure III is a scanning electron microscope photomicrograph of the top surface (magnified 100,000 times) and the bottom surface (magnified 80 times) of a membrane (having a molecular weight cut-off of 25,000) produced in accordance with the present invention by casting a solution of 10% polysulfone in a 78/12 mixture of dimethylformamide/hexane. The pore size of the asymmetric support is approximately 20,000 times the size of the pores in the skin (i.e., the membrane has a pore asymmetry of 1:20,000). The water permeability of the membrane is 0.30 cm/min psi.

Figure IV is a scanning electron microscope photomicrograph of a prior art Millipore ultrafilter PSED, also having a molecular weight cut-off of 25,000. This top surface is magnified 100,000 times and the bottom surface is magnified 20,000 times. The pore assymmetry is 1:1. Its water permeability is 0.01 cm/min psi.

A comparison of Figures III and IV illustrates the highly asymmetric character of membranes produced according to the present invention vis-a-vis prior art membranes.

The membranes produced according to the method of the present invention have improved physical properties over prior art membranes. For example, a 0.2 μm polysulphone membrane produced according to the present invention has a tensile strength of 30 kg/cm², an elongation at break of 24% (see Example V) in comparison to an elongation of about 5% with respect to 0.2 μm prior art membranes. These improved physical properties are important in most membrane applications but are of particular importance in medical applications where any membrane rupture due to insufficient elongation could be critical.

In the above description, permeability data have been quoted in units of cm/min psi; the relevant values can be converted to cm/min Pa by multiplication by $145 \times 10^{-6}$.

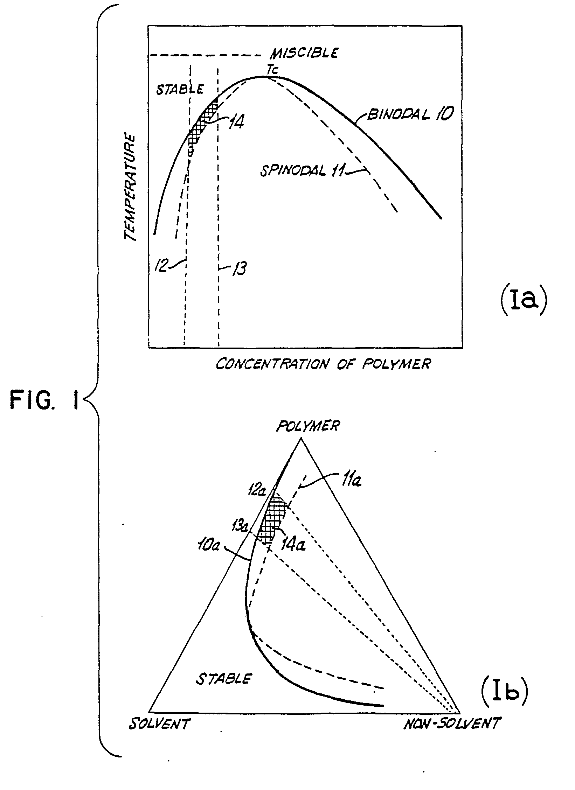

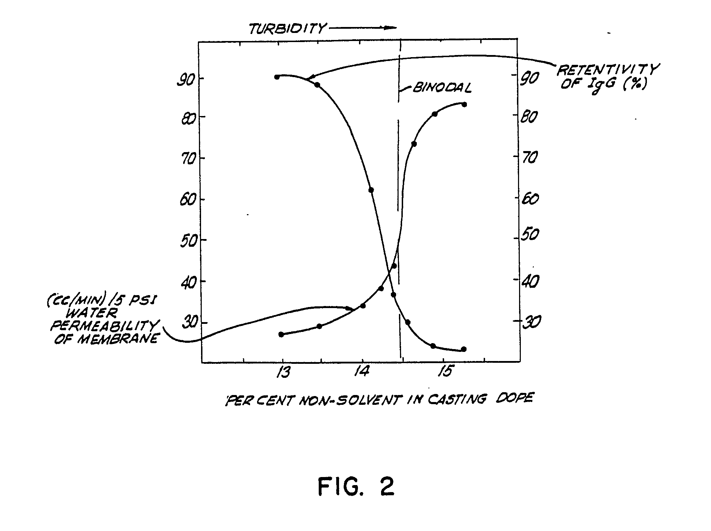

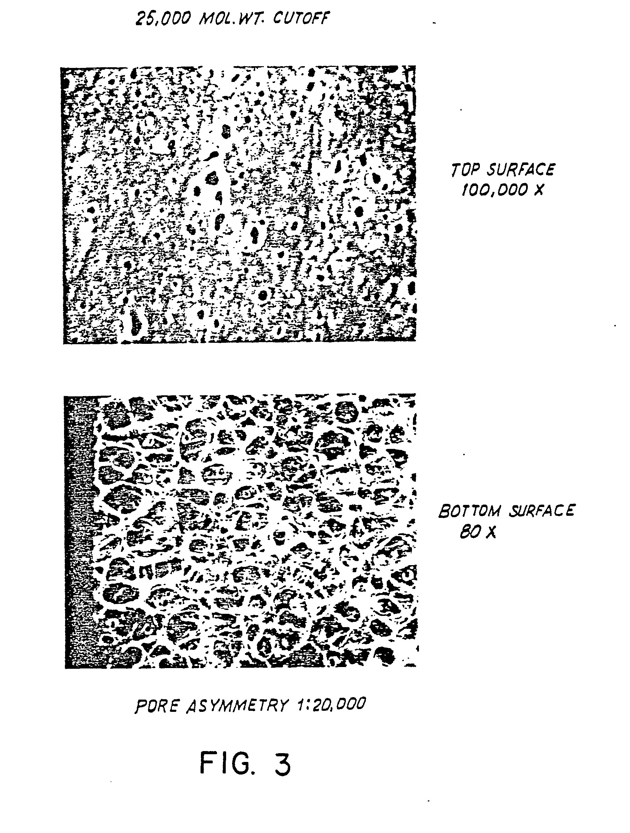

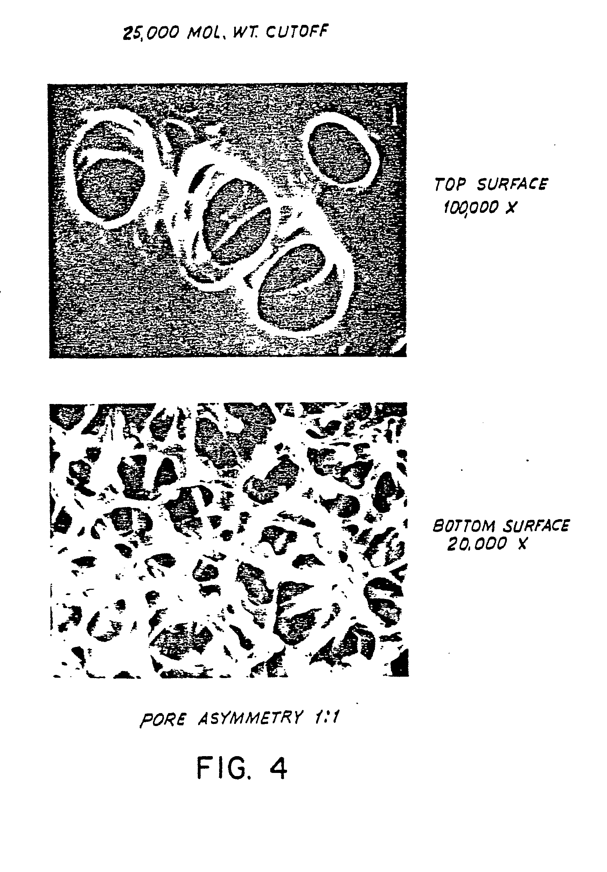

**Claims**

1. A method of preparing an asymmetric integral membrane comprising a skin and a porous support having a reticulated structure, which comprises casting a polymer dope while said dope is in a turbid metastable liquid dispersion condition, the concentration of polymer in said polymer dope being high enough to produce a coherent membrane yet low enough to form said reticulated structure.

2. A method according to claim 1, wherein said polymer dope when left undisturbed segregates into at least two liquid layers.

3. A method according to claim 2, wherein said segregation occurs within two weeks.

4. A method according to any of claims 1 to 3, wherein said polymer dope includes a non-solvent for said polymer.

5. A method according to claim 4, wherein said membrane is made by liquid quenching and said non-solvent is only partially miscible with the quenching liquid.

6. A method according to any of claims 1 to 5, wherein said polymer dope is close to its critical temperature at the time of quenching.

7. A method according to any of claims 1 to 6, wherein said polymer dope is cast into a quenching liquid which is completely miscible with the main solvent of said polymer dope.

8. A method according to any of claims 1 to 7, wherein said metastable liquid dispersion condition is reached by maintaining the temperature of the dope above its critical temperature and then cooling to below said critical temperature.

9. A method according to any of claims 1 to 8, in which the polymer is a polyimide, a polyacrylonitrile, a polycarbonate, a polyarylsulphone, a polyquinoxaline, a polyquinoline, or a mixture of two or more thereof.

**Patentansprüche**

1. Verfahren zum Herstellen einer asymmetrischen integralen Membran, enthaltend eine Haut und einen porösen Träger, der eine netzförmige Struktur aufweist, durch Gießen einer polymeren Masse, während sich die Masse in einem dickflüssigen, metastabilen flüssigen Dispersionszustand befindet, wobei die Konzentration des Polymers in der polymeren Masse hoch genug ist, um eine kohärente Membran zu erzeugen, aber noch immer niedrig genug ist, um die netzförmige Struktur auszubilden.

2. Verfahren nach Anspruch 1, bei dem die Polymermasse sich in wenigstens zwei Flüssigkeitsschichten entmischt, wenn sie ungestört gelassen wird.

3. Verfahren nach Anspruch 2, bei dem die Entmischung innerhalb von zwei Wochen auftritt.

4. Verfahren nach einem der Ansprüche 1 bis 3, bei dem die Polymermasse ein Nicht-Lösungsmittel für das Polymer enthält.

5. Verfahren nach Anspruch 4, bei dem die Membran durch Flüssigkeitsspritzen hergestellt wird und das Nicht-Lösungsmittel nur teilweise mit der Spritzflüssigkeit mischbar ist.

6. Verfahren nach einem der Ansprüche 1 bis 5, bei dem die Polymermasse beim Spritzen dicht an ihrer kritischen Temperatur ist.

7. Verfahren nach einem der Ansprüche 1 bis 6, bei dem die Polymermasse in eine Spritzflüssigkeit gegossen wird, die vollständig mit dem Hauptlösungsmittel der Polymermasse mischbar ist.

8. Verfahren nach einem der Ansprüche 1 bis 7, bei dem ein metastabiler flüssiger Dispersionszustand erreicht wird, indem die Temperatur Masse über ihrer kritischen Temperatur gehalten wird und sie dann unter die kritische Temperatur abgekühlt wird.

9. Verfahren nach einem der Ansprüche 1 bis 8, bei dem das Polymer ein Polyimid, ein Polyacrylnitril, ein Polycarbonat, ein Polyarylsulfon, ein Polyquinoxalin, ein Polyquinolin oder ein Gemisch von zwei oder mehr derselben ist.

**Revendications**

1. Un procédé de fabrication d'une membrane intégrale asymétrique comprenant une peau et un support poreux ayant une structure réticulée, qui consiste à couler une solution de polymère tandis que ladite solution est à l'état de dispersion liquide métastable trouble, la concentration du polymère dans ladite solution de polymère étant suffisamment élevée pour produire une membrane cohérente et cependant suffisamment faible pour former ladite structure réticulée.

2. Un procédé selon la revendication 1, dans lequel ladite solution de polymère se sépare au repos en au moins deux couches liquides.

3. Un procédé selon la revendication 2, dans lequel ladite séparation se produit en l'espace de 2 semaines.

4. Un procédé selon l'une quelconque des revendications 1 à 3, dans lequel ladite solution de polymère comprend un non-solvant dudit polymère.

5. Un procédé selon la revendication 4, dans lequel ladite membrane est faite par trempe par un liquide et ledit non-solvant est seulement partiellement miscible avec le liquide de trempe.

6. Un procédé selon l'une quelconque des revendications 1 à 5, dans lequel ladite solution de polymère est proche de sa température critique au moment de la trempe.

7. Un procédé selon l'une quelconque des revendications 1 à 6, dans lequel ladite solution de polymère est coulée dans un liquide de trempe qui est complètement miscible avec le solvant principal de ladite solution de polymère.

8. Un procédé selon l'une quelconque des revendications 1 à 7, dans lequel ledit état de dispersion liquide métastable est atteint en maintenant la température de la solution au-dessus de sa température critique et ensuite en refroidissant au-dessous de ladite température critique.

9. Un procédé selon l'une quelconque des revendications 1 à 8, dans lequel le polymère est un polyimide, un polyacrylonitrile, un polycarbonate, une polyarylsulfone, une polyquinoxaline, une polyquinoléine ou mélange de deux ou plusieurs de ceux-ci.

FIG. I

(Ia)

CONCENTRATION OF POLYMER

(Ib)

FIG. 2

25,000 MOL.WT. CUTOFF

TOP SURFACE
100,000 X

BOTTOM SURFACE
80 X

PORE ASYMMETRY 1:20,000

FIG. 3

3

25,000 MOL. WT. CUTOFF

TOP SURFACE
100,000 X

BOTTOM SURFACE
20,000 X

PORE ASYMMETRY 1:1

FIG. 4